# FASCICULE DE BREVET EUROPEEN

(11) **EP 2 480 454 B1**
(45) Date de publication et mention de la délivrance du brevet: **02.11.2016**
(21) Numéro de dépôt: 10770591.5
(22) Date de dépôt: 20.09.2010
(51) Int. Cl.: B64D 27/18, B64D 27/00, B64D 27/26

(54) **ENSEMBLE D'AERONEF COMPRENANT UN ELEMENT D'ACCROCHAGE D'UN MOTEUR ET AERONEF ASSOCIE**
FLUGZEUGANORDNUNG MIT EINEM ELEMENT ZUR BEFESTIGUNG EINES TRIEBWERKS UND ZUGEHÖRIGES FLUGZEUG
AIRCRAFT ASSEMBLY INCLUDING AN ELEMENT FOR ATTACHING AN ENGINE AND RELATED AIRCRAFT

(30) Priorité: 22.09.2009 FR 0956527
(43) Date de publication de la demande: 01.08.2012
(73) Titulaire: Airbus Operations, 31060 Toulouse (FR)
(72) Inventeur: JOURNADE, Frédéric, F-31100 Toulouse (FR); LAFONT, Laurent, F-31320 Pechbusque (FR); AGOSTINI, Laurent, F-31880 La Salvetat Saint Gilles (FR); RENAUD, Eric, F-31480 Brignemont (FR); JALBERT, Delphine, F-31840 Seilh (FR)
(74) Mandataire: Ilgart, Jean-Christophe
(86) Numéro de dépôt international: PCT/FR2010/051950
(87) Numéro de publication internationale: WO 2011/036386

(56) Documents cités:
- EP-A1- 1 902 951
- WO-A1-2008/000924
- FR-A1- 2 907 098
- FR-A1- 2 928 347

## Description

Le sujet de cette invention est un ensemble d'aéronef comprenant un élément d'accrochage d'un moteur et un aéronef associé.

L'élément est associé à un mât d'accrochage du moteur à un fuselage ou d'une voilure. La plupart des mâts connus comprennent une partie principale linéaire, puis une partie de raccord à laquelle le moteur est directement rattaché et qui est en forme de demi-barrique. Cette conception présente plusieurs inconvénients, et avant tout une mauvaise transmission des efforts de poussée originaires du moteur, qui produisent des moments de flexion importants et mal répartis dans la partie de raccord, ainsi que des vibrations qu'il est difficile de filtrer et qui nuisent au confort dans la cabine d'aéronef.

Une considération importante est qu'il est souvent impossible de disposer la partie principale du mât dans le plan du centre de gravité du moteur, quoiqu'il soit souvent préconisé d'accrocher le moteur au mât par ce plan afin de réduire la déformation du moteur; de découpler les modes vibratoires et permettre de les traiter individuellement pour les filtrer ; et enfin de limiter la flexion à l'intérieur du moteur, qui conduit à des irrégularités de jeu entre le rotor et le stator, une baisse des performances, voire de l'usure prématurée. Si la partie principale du mât doit être éloignée du centre de gravité du moteur, par exemple pour être à l'écart d'hélices, l'accrochage du moteur par le centre de gravité doit être obtenu en acceptant un porte-à-faux dans la partie de raccord, ce qui est souvent inacceptable avec les conceptions existantes.

Le document WO-A-2008/000924, qui est considéré l'état de la technique plus proche, décrit un élément d'accrochage d'un moteur d'aéronef à un mât qui est composé de deux brides circulaires séparées par un treillis de profilés ou de tubes, mais l'élément d'accrochage est suspendu par ses deux brides à l'extrémité du mât de sorte qu'il n'est pas exploité pour transmettre de façon régulière les mouvements de flexion au mât. Au contraire, le mât comporte lui-même une extrémité horizontale en porte-à-faux, qui reprend ces mouvements de flexion en se déformant, de façon défavorable. Enfin, le moteur n'est apparemment pas accroché par le plan de son centre de gravité, ce qui implique une augmentation de ces mouvements de flexion.

Le but de l'invention est d'adjoindre au mât un élément d'accrochage du moteur, ayant la capacité de reprendre la totalité des efforts moteurs dans un plan perpendiculaire à l'axe du moteur, attaché à la partie de raccord du mât et au moteur par des extrémités opposées, dont la structure est bien différente de celle de la partie de raccord, de manière que l'élément d'accrochage possède une résistance suffisante aux efforts produits par le porte-à-faux et soit capable de transmettre dans de bonnes conditions, avec une répartition assez régulière, l'ensemble des efforts moteurs jusqu'au mât et en particulier les moments M_{y} et M_{z}. On cherche aussi un assemblage facile entre l'élément, le mât et le moteur.

Sous une forme générale, l'ensemble d'aéronef comprend un mât d'accrochage, un moteur et un élément d'accrochage s'étendant entre le mât d'accrochage et le moteur, l'élément d'accrochage comprenant une première bride attachée au mât, une seconde bride attachée au moteur, les brides étant circulaires, et une structure rigide joignant les brides, les brides et la structure rigide entourant le moteur en enveloppant complétement le moteur, caractérisé en ce que la seconde bride s'étend autour d'une région de centre de gravité du moteur, et le moteur est monté sur le mât en porte-à-faux, tout la porte-à-faux appartenant à l'élément d'accrochage.

La forme circulaire de la seconde bride permet d'y attacher le moteur de façon régulière sur tout son pourtour et donc de transmettre un effort de poussée de façon assez uniforme à l'élément d'accrochage, en limitant aussi sa flexion. Il devient facile de réaliser l'accrochage du moteur par le plan de son centre de gravité, l'élément d'accrochage pouvant sans grand inconvénient avoir une grande longueur. La partie de raccord du mât peut être construite avec une forme simplifiée, facile à fabriquer et dépourvue de porte-à-faux en direction axiale du moteur et de l'aéronef. La liaison de l'élément d'accrochage au mât par la première bride circulaire est aussi favorable à une transmission régulière des efforts au mât en y limitant encore la flexion.

La structure rigide est favorablement composée d'éléments discrets, et discontinue sur la circonférence, pour la rendre plus légère. Ces éléments discrets peuvent être des cadres, des profilés ou des tubes.

La liberté de conception de l'élément d'accrochage peut s'étendre aux brides, qui peuvent facilement être choisies non parallèles entre elles selon les contraintes d'aménagement du moteur ou les caractéristiques de transmission des efforts.

La bonne répartition des efforts de même que la limitation de la déformée du moteur sont fréquemment facilitées si la seconde bride est attachée au moteur par des liaisons transmettant des efforts seulement dans certaines directions, et de même si la première bride est aussi attachée au mât par de telles liaisons.

Ces avantages sont plus accessibles avec les conceptions favorables suivantes. Les liaisons définissent avantageusement un montage isostatique entre la première bride ou la seconde et le mât ou le moteur, selon le cas. Un tel montage, particulièrement apprécié, consiste en trois liaisons réparties autour de la première bride ou de la seconde bride et conformées pour transmettre les efforts dans deux directions chacune. Ces deux directions sont favorablement une direction axiale de l'aéronef et une direction essentiellement tangentielle de la première bride ou de la seconde pour chacune des liaisons souples.

Dans une configuration particulièrement préférée, les liaisons sont plus régulièrement réparties autour de la seconde bride qu'autour de la première bride, respectivement à des angles de 90° à 120° et à des angles d'au plus 90°, chacune des brides ayant une liaison à une génératrice supérieure de l'assemblage.

Pour supporter la partie sous le mât en porte-à-faux par rapport à la jonction de la bride au moteur, une liaison souple additionnelle est ajoutée entre le moteur et le mât, la liaison souple additionnelle et l'élément d'accrochage étant situés de part et d'autre du mât dans une direction axiale de l'aéronef.

La filtration des vibrations originaires du moteur pourra être obtenue en réalisant l'ensemble de ces liaisons par des liaisons souples, et plus particulièrement celles joignant la seconde bride ou moteur.

Un autre bénéfice de l'invention qu'est la simplification de la forme du mât, et plus particulièrement de sa partie de raccord, peut être atteint par un mât qui comprend une partie linéaire et une partie de raccord joignant la partie principale à l'élément d'accrochage, la partie de raccord comprenant deux ailes planes s'étendant latéralement à la partie principale en formant un angle entre elles, et une bride d'attache s'étendant sur au moins un secteur de cercle, jointe aux ailes par une face plane et attachée à la première bride de l'élément d'accrochage du moteur pour une face opposée. Cette forme de mât est simple à fabriquer et assembler, et les ailes planes de la partie de raccord sont bien résistantes aux efforts. Il est toutefois avantageux qu'elles aient une largeur égale à la partie principale du mât en direction axiale de l'aéronef, afin que tout le porte-à-faux appartienne à l'élément d'accrochage, plus apte à subir les efforts correspondants.

Les ailes sont avantageusement de plus en plus courtes en s'éloignant de la bride d'attache afin d'exposer mieux le moteur, à des fins d'inspection et d'entretien.

L'invention concerne encore un aéronef pourvu d'un élément d'accrochage du moteur ou d'un ensemble conforme à ce qui précède.

L'invention sera maintenant décrite en liaison aux figures :
- les figures 1 et 2 représentent une première conception d'accrochage de moteur.selon l'art antérieur,
- les figures 3 et 4 une deuxième conception antérieure,
- les figures 5 à 8 représentent une conception d'accrochage d'aéronef qui ne fait pas parti de l'invention, quoique le mât soit utilisable avec celle-ci,
- la figure 9, une autre conception de mât,
- les figures 10 et 11, une première réalisation possible de l'invention,
- et la figure 12, une deuxième réalisation possible de l'invention.

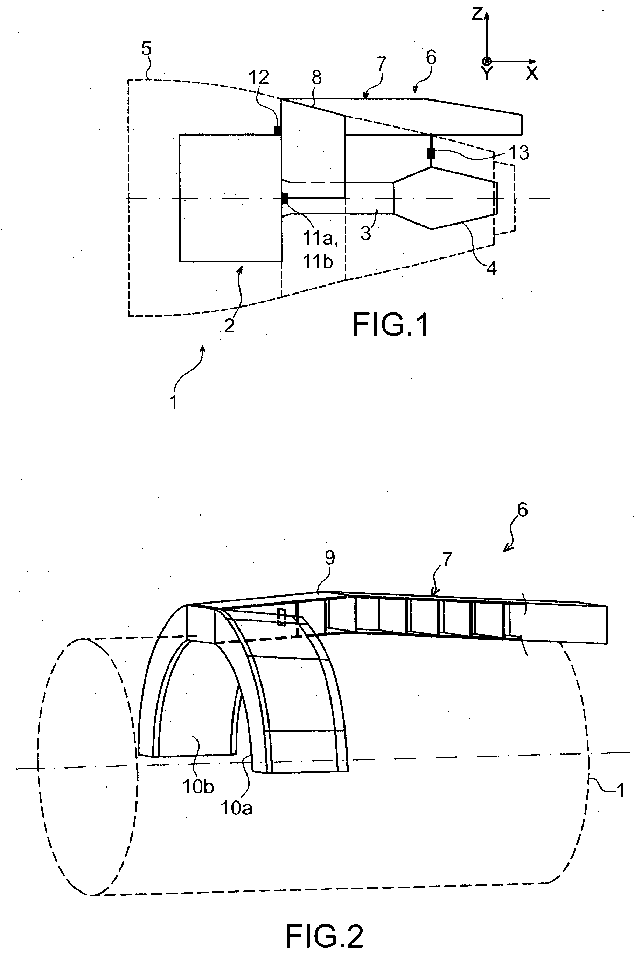

Une extrémité d'un mât d'accrochage conforme aux indications précédentes est le sujet du brevet français 2 900 907, dont la description est brièvement reprise aux figures 1 et 2. Le moteur 1 comprend d'abord en arrière un élément de soufflante 2, un élément à haute pression 3 («core») et un élément d'éjection 4 d'avant en arrière dans une nacelle 5. Le mât 6 comprend une portion principale 7 rigide s'étendant longitudinalement au-dessus de la portion à haute pression 3 et de la portion d'éjection 4, et une partie d'accrochage 8. La figure 2 montre que la partie principale 7 a une structure raidie en caissons et que la partie d'accrochage 8 comprend un longeron 9 central, s'étendant sur la génératrice supérieure du moteur 1 (à douze heures) qui prolonge la partie principale 7; la partie d'accrochage 8 est elle-même prolongée par des ailes semi-circulaires, 10a et 10b chacune en quart de cercle et qui ont encore une structure raidie en caissons. La figure 1 représente encore les liaisons du moteur au mât, 11a et 11b s'étendant au bas des ailes 10a et 10b respectivement, 12 s'étendant devant le longeron 9 et 13 s'étendant entre la partie principale 7 et le milieu de la portion d'éjection 4, nettement à l'arrière des précédentes, qui sont disposées à un plan de jonction entre la portion de soufflante 2 et la portion à haute pression 3.

Cette conception présente donc les inconvénients de difficulté de conception et de fabrication mentionnés plus haut, à cause des variations de direction entre la portion principale 7 horizontale, le longeron 9 incliné et les ailes 10a et 10b non inclinées et des risques d'une mauvaise transmission des efforts de poussée au mât 6 à cause de la grande longueur horizontale de la portion 7 et du porte-à-faux correspondant.

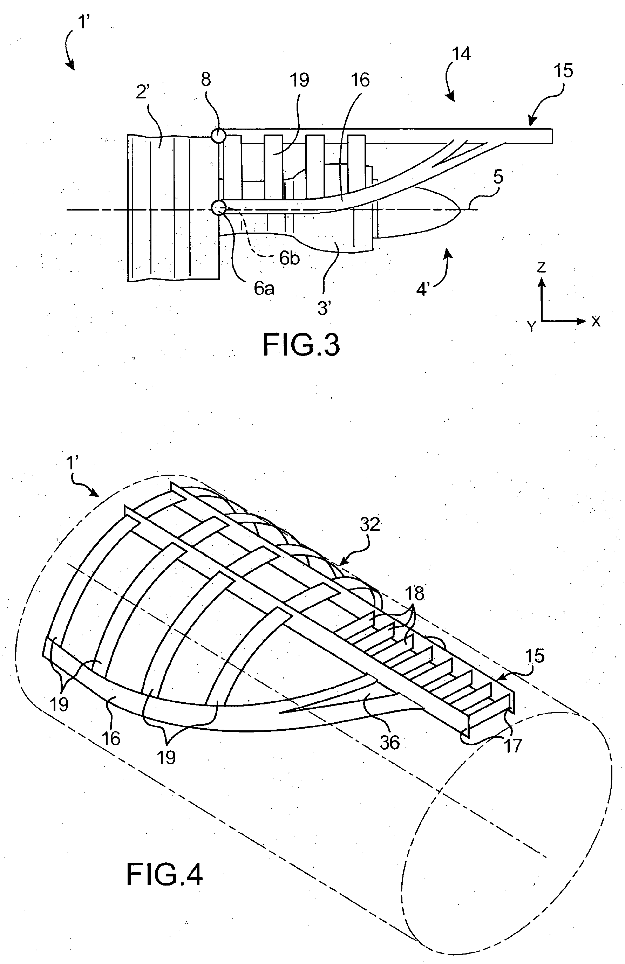

On mentionnera encore la conception du brevet français 2 873 988, représentée aux figures 3 et 4, où un moteur 1', analogue au précédent en ce qu'il est composé d'une portion de soufflante 2', d'une portion à haute pression 3' et d'une portion d'éjection 4', est soutenu par un mât 14 comprenant une structure rigide 15 orientée dans l'axe d'aéronef, et duquel se détachent des membrures 16 symétrique (une seule apparaît sur les figures) qui s'abaissent le long du moteur 1' jusqu'à son plan horizontal médian quand on se dirige vers l'avant. La structure rigide 14 est composée de deux longerons 17 parallèles nervurés par des entretoises intermédiaires transversales 18 qui les relient. Des arceaux 19 relient les membrures 16 aux longerons 17, et les longerons 17 entre eux en avant des entretoises 18. Ici encore le porte-à-faux du mât 14 est important et le grand nombre de pièces courbes rend la fabrication difficile.

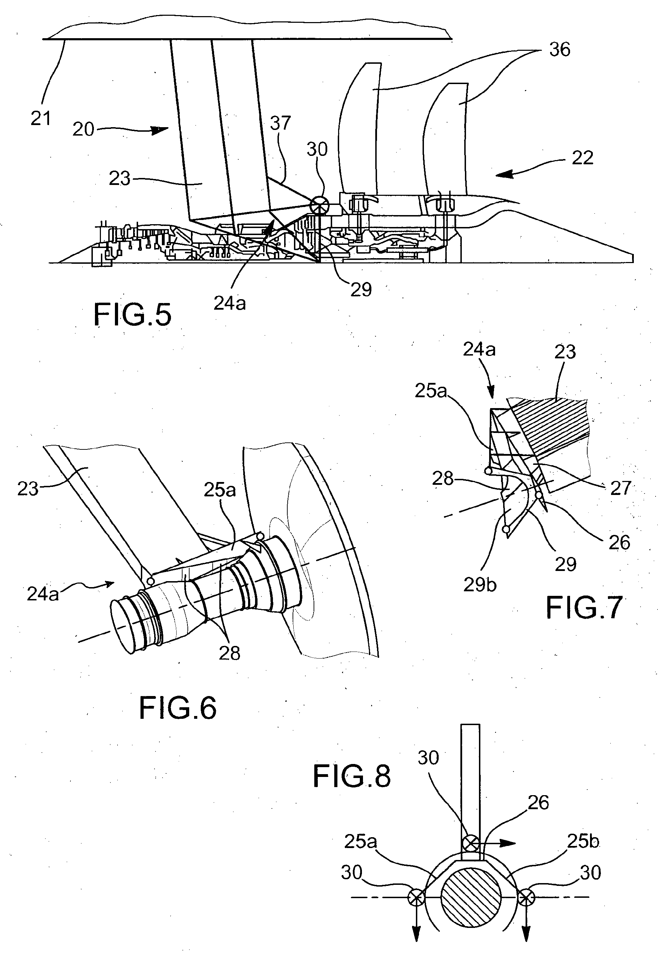

Un premier mode de réalisation d'un mât d'accrochage nouveau est décrit au moyen des figures 5, 6, 7 et 8. Le mât porte la référence générale 20 et relie un aéronef 21 (représenté partiellement) à un moteur, maintenant 22. Il comprend une partie principale 23 linéaire et sensiblement verticale, pouvant avoir une structure de caisson comme dans de nombreuses réalisations connues, et une partie de raccord 24a au moteur 22. La partie de raccord 24a comprend deux ailes 25a et 25b symétriques, et formant entre elles un angle aigu ou obtus en s'étendant de part et d'autre de la partie principale 23 en direction latérale et au-dessous d'elle, en coiffant une portion centrale du moteur 22. Les ailes 25a et 25b sont des panneaux plans, sont réunies entre elles par un panneau central 26 avec lequel elles sont d'une pièce et qui est uni à une face extrême 27 de la partie principale 23, et elles sont rendues rigides par des nervures 28 situées sous la partie principale 23 et qui les relient entre elles ainsi qu'au panneau central 26.

La partie de raccord 24a comprend encore une bride d'attache 29, plane ou en forme de caisson s'étendant sur un secteur de cercle; elle est unie aux ailes 25a, 25b et au panneau central 26 par une face plane, et porte les liaisons 30 au moteur 22. Une des liaisons 30 est à douze heures (à la génératrice supérieure du moteur 22), les autres à hauteur du plan médian horizontal ou plus haut (formant un angle de 180° ou moins dont le sommet est à l'axe de rotation du moteur 22) sur sa face. Cette réalisation est caractérisée par une très grande simplicité de conception qui se traduit en particulier en ce que toutes les pièces sont planes et délimitées par des arêtes rectilignes, qu'il est donc facile d'assembler, à l'exception inévitable de la bride d'attache 29 qu'il est toutefois possible de fixer par une face plane aux extrémités des ailes 25a, 25b et du panneau central 26. On limite aussi l'apparition de contraintes complexes dans la partie de raccord 24a, notamment de flexion autour de l'axe vertical Z et de l'axe transversal Y et qui sont difficiles à éviter dans des conceptions précédentes de forme plus compliquée : les efforts de poussée du moteur 22 sont transmis aux ailes 25a, 25b et au panneau central 26 sous forme d'efforts dirigés dans leur plan, théoriquement sans composante perpendiculaire à l'égard de laquelle la partie de raccordement serait beaucoup moins rigide.

Les liaisons 30 peuvent être placées dans un même plan transversal du moteur 22, avantageusement près de son centre de gravité, et peuvent constituer en des liaisons souples. Les effets en découlant seront décrits plus en détail à propos d'une autre réalisation. Il est à noter que d'une façon générale les modes de réalisation décrits dans ce texte ne sont ni exclusifs ni incompatibles, mais que leurs détails peuvent au contraire souvent être combinés ou transposés en retrouvant les efforts associés à ces détails.

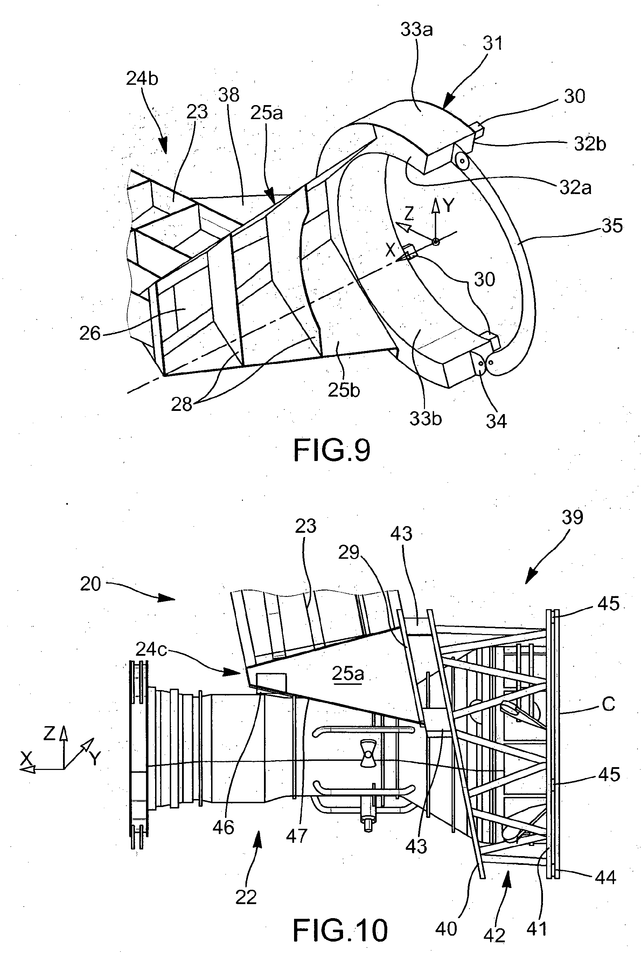

La figure 9 représente un autre mode de réalisation, où la bride d'attache porte désormais la référence 31 et se distingue de la précédente en ce qu'elle s'étend sur une certaine largeur (mesurée dans la direction axiale du moteur 22 et de l'aéronef 21), qu'elle a une structure cloisonnée en caissons avec deux peaux planes 32a et 32b respectivement fixées aux ailes 25a et 25b et au panneau central 26, et au moteur 22 par les liaisons 30, deux peaux circulaires 33a et 33b concentriques joignant des précédentes, et une peau interne 34 de raidissage, s'étendant entre les peaux circulaires 33a et 33b à mi-distance des peaux planes 32a et 32b. Un élément peut-être plus remarquable de ce mode de réalisation est un arceau 35 de raidissage qui relie les extrémités de la bride d'attache 31, en étant articulé à l'une d'elles et assujetti l'autre en passant sous le moteur 22; son rôle n'est pas de soutenir le moteur 22 mais d'améliorer la cohésion de la partie de raccord (24b dans ce mode de réalisation) ; il est préconisé que la bride d'attache 31 s'étende alors sur un peu plus d'un demi-cercle, et l'arceau 35 sur un peu moins.
Un inconvénient commun à ces deux modes de réalisation apparaît toutefois quand la partie principale 23 du mât 20 doit être éloignée de la région d'attache au moteur 22 en direction axiale, par exemple pour l'éloigner d'hélices 36, ce qui oblige alors à allonger la partie de raccord 24a ou 24b et à laisser subsister un porte-à-faux important entre la partie principale 23 du mât 20 et les liaisons 30 au moteur 22. Les efforts dus à ce porte-à-faux peuvent être en partie absorbés par des poutres d'étayage 37 (représentées à la figure 5) reliant la bride d'attache 29 à la partie principale 23 ou, de façon équivalente des nervures pleines 38 s'étendant aux mêmes endroits. Une conception plus radicale pour réduire les effets de porte-à-faux, en éliminant celui-ci de la partie de raccord 24a ou 24b, sera décrite au moyen d'autres modes de réalisation du mât d'accrochage, détaillés ci-dessous.

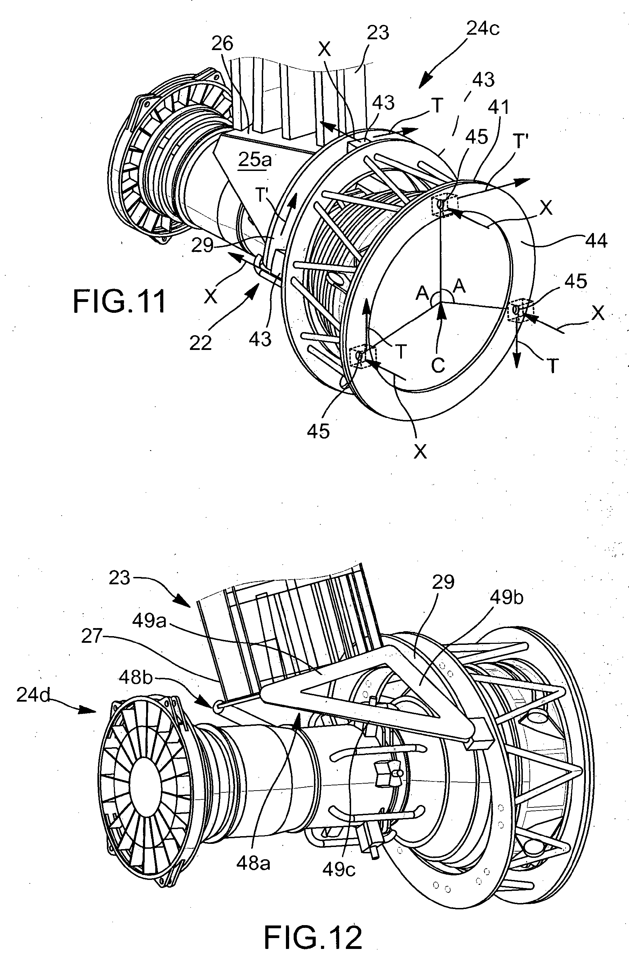

On se reporte aux figures 10 et 11. La partie de raccord 24c comprend comme précédemment des ailes 25a, 25b et un panneau central 26, mais qui sont ici moins larges, c'est-à-dire qu'ils ne dépassent pas de la partie principale 23 dans la direction axiale X de l'aéronef. La bride d'attache 29 n'est pas ici jointe directement au moteur 22 mais à un élément d'accrochage 39 composé d'un première bride 40, d'une seconde bride 41 et d'une structure rigide 42 intermédiaire aux brides 40 et 41. La première bride 40 est reliée à la bride d'attache 29 par des boulonnages ou par des liaisons discrètes (43) rigides ou souples; et la seconde bride 41 est reliée à une bride 44 du moteur 22, par des boulonnages ou des liaisons discrètes (45) rigides ou souples. La seconde bride 41 et les liaisons 45 entourent une région du centre de gravité C du moteur 22 (représenté de façon tronquée sur ces figures). La structure rigide 42 peut consister en des panneaux, ou, peut-être plus avantageusement, en éléments discontinus sur la circonférence comme des cadres, des poutres ou des tubes, ce qu'on a représenté. Il est à noter que les brides 40 et 41 n'ont pas d'orientations imposées et ne sont pas forcément parallèles entre elles : il est plausible que la seconde bride 41 portant les liaisons 45 au moteur 22 soit dans un plan coupant à angle droit l'axe du moteur 22, et que la première bride 40 soit oblique, parallèle à la bride d'attache 29 prolongeant la face arrière de la partie principale 23 du mât 20, cette partie principale 23 pouvant être inclinée ; mais cela n'est pas indispensable.

L'élément d'accrochage 39 intermédiaire à la partie de raccord 24c et au moteur 22 a une résistance plus grande que celle-là et résiste donc mieux qu'elle aux efforts produits par le porte-à-faux. Un autre avantage est qu'elle forme une structure circulaire qui enveloppe complètement le moteur 22 et résiste donc à ce qu'on appelle des tirs de disque, c'est à dire des avaries du rotor du moteur 22 dans lesquelles une partie s'étendant sur un secteur angulaire se détache et est projetée sous l'action de forces centrifuges hors du moteur en crevant son l'enveloppe et détruisant les structures environnantes. Ces tirs de disques, qui peuvent se produire à des emplacements variés peuvent endommager ou même rompre le mât ; mais cette éventualité devrait être exclue ici, puisque l'élément d'accrochage 39 s'étend sur un tour complet du moteur 22, et devrait donc rester majoritairement intact même si le tir le traversait ; et par ailleurs, le mât 20 et la bride d'attache 29 ont des extensions suffisantes en direction de l'axe du moteur et en direction angulaire pour ne pas être coupées par un tir dirigé vers eux.

Des liaisons judicieusement choisies permettent des montages isostatiques, qui permettent de maîtriser la répartition des contraintes et ainsi d'éviter les contraintes les plus favorables dans les éléments qu'elles relient, à savoir les contraintes de flexion dans la partie de raccord 24 et aussi dans le moteur 22, puisque les flexions conduisent à des irrégularités de jeu entre le rotor et le stator, à des baisses de performance, voire à de l'usure prématurée. Un montage intéressant comprend trois liaisons 45 entre la seconde bride 41 et la bride 44 du moteur, réparties régulièrement sur la circonférence, avec l'une placée à la génératrice supérieure, et chacune étant conçue pour pouvoir transmettre un effort dans la direction axiale X et un autre effort dans la direction tangentielle T du moteur. La répartition peut être absolument régulière, les liaisons 45 étant à des angles de 120°, ou moins régulière, les liaisons 45 latérales faisant des angles A de 90° à 120° avec la liaison 45 supérieur. De plus, les liaisons 43 entre la première bride 40 de l'élément d'accrochage 39 et la bride d'attache 29 sont conçues pour transmettre des efforts dans la direction X et la direction T', sensiblement tangentielle aux brides et dirigée précisément dans la direction principale de l'aile 25a ou 25b ou du panneau central 26, devant lequel les liaisons 43 s'étendent respectivement. On notera une dernière liaison souple 46, reliant directement la face inférieure du panneau central 26 et le moteur 22, à l'avant du mât 20, c'est-à-dire de l'autre côté de la bride d'attache 29 que les autres liaisons souples 43 et 45.

Dans un mode particulier de réalisation, des liaisons 43 et plus particulièrement 45 peuvent être souples. Cette réalisation permet de filtrer les vibrations du moteur vis-à-vis du reste de l'aéronef.

Les effets de cette conception peuvent être explicités ainsi. Si l'attache du moteur 22 se fait par un plan passant par le centre de gravité, il est alors possible de découpler les modes propres de vibration qui sont transmis au reste de l'appareil et plus facile de les traiter pour les réduire, en utilisant des mesures connues et notamment en choisissant judicieusement les liaisons souples 45 et leurs emplacements. Le découplage provenant du montage isostatique et la souplesse des liaisons souples permettent donc de filtrer les vibrations, et le choix de liaisons transmettant seulement des forces axiales X et tangentielles T évite de transmettre des contraintes de flexion dans l'élément d'accrochage 39. Les liaisons souples 43 adjacentes à la bride d'attache 39 ont des propriétés et des effets analogues d'éviter de fléchir les ailes 25a, 25b et le panneau central 26 et de permettre de filtrer les vibrations. La transmission des efforts du moteur 22 au mât 20 est graduelle, sans irrégularité excessive des contraintes dans la partie du raccord 24c et l'élément d'accrochage 39, si les liaisons 43 et 45 sont assez bien alignées par paires dans la direction X, c'est-à-dire que les liaisons 43 et 45 sont aussi nombreuses et à des espaces angulaires voisins. Les efforts découlant du porte-à-faux sont subis principalement par l'élément d'accrochage 39 qui est très rigide, puis par les ailes 25a et 25b qui, tout en étant moins rigides, leur résistent bien aussi grâce à leur planéité, à l'absence d'effort perpendiculaire à leur plan et à leur soutien par la partie principale 23 sur toute leur largeur (en direction axiale X). La liaison souple additionnelle 46 permet de reprendre une partie des efforts Y et Z dus au porte-à-faux. Elle peut servir aussi à filtrer certains modes de vibration, sans introduire une flexion nuisible du moteur 22.

Malgré tous les avantages des liaisons discrètes, il est possible d'y renoncer et d'éclisser les brides 39, 40, 41 et 44 par des boulons, ce qui peut impliquer un allégement de l'ensemble.

Un autre avantage des ailes 25a et 25b et qu'elles peuvent facilement être pourvues d'un bord oblique 47 de manière qu'elles soient de plus en plus courtes vers l'avant, c'-est-à-dire qu'elles coiffent moins le moteur 22 et elles permettent donc un accès plus facile que les structures habituelles en quart de cercle, qu'il serait plus difficile de construire avec un tel bord.

On passe à la figure 12 pour un autre mode de réalisation d'une partie de raccord 24d. Les ailes 25a, 25b sont remplacées par des ailes 48a et 48b également planes et ayant à peu près la même extension, mais qui ne sont pas composées ici de panneaux ou de plaques mais de trios de bielles articulées en elles en triangles, une première des bielles 49a s'étendant contre la face extrême de la partie principale 23, une deuxième 49b le long de la bride d'attache 29, et la troisième 49c entre les précédentes, à l'emplacement du bord oblique 47 de l'autre mode de réalisation. Le panneau 26 central peut éventuellement être absent. L'invention est applicable à différents genres de moteur, notamment le propulseur à soufflante (propfan) et le turboréacteur à double flux (turbofan). Le mât peut être accroché au fuselage ou à la voilure de l'aéronef 21.

## Revendications

1. Ensemble d'aéronef comprenant un mât d'accrochage (20), un moteur (22) et un élément d'accrochage (39) s'étendant entre le mât d'accrochage (20) et le moteur (22), l'élément d'accrochage comprenant une première bride (40) attachée au mât (20), une seconde bride (41) attachée au moteur (22), les brides (40, 41) étant circulaires, et une structure rigide (42) joignant les brides, les brides (40, 41) et la structure rigide (42) entourant le moteur (22) en enveloppant complètement le moteur, **caractérisé en ce que** la seconde bride (41) s'étend autour d'une région de centre de gravité du moteur (22), et le moteur est monté sur le mât en porte-à-faux, tout le porte-à-faux appartenant à l'élément d'accrochage.

2. Ensemble d'aéronef selon la revendication 1, **caractérisé en ce que** la structure rigide est composée d'éléments discrets, et est discontinue sur la circonférence des brides.

3. Ensemble d'aéronef selon la revendication 1 ou 2, **caractérisé en ce que** la seconde bride ou la première bride est attachée au moteur ou au mât par des liaisons discrètes (45, 43) définissant un montage isostatique entre la première bride (40) ou la seconde bride (41) et le mât (20) ou le moteur (22).

4. Ensemble d'aéronef selon la revendication 3, **caractérisé en ce que** les liaisons sont au nombre de trois et réparties autour de la première ou de la seconde bride et conformées pour transmettre des efforts suivant deux directions chacune (X, T ; X, T'), les deux directions étant une direction axiale (X) de l'aéronef (21) et une direction essentiellement tangentielle (T, T') de la première bride ou de la seconde bride pour chacune des liaisons souples.

5. Ensemble d'aéronef selon la revendication 3, **caractérisé en ce que** chacune des brides a une des liaisons à une génératrice supérieure et que les liaisons sont réparties autour de la seconde bride en faisant des angles de 90° à 120° entre elles mais réparties autour de la première bride en faisant des angles d'au plus 90°.

6. Ensemble d'aéronef selon l'une quelconque des revendications 1 à 5, **caractérisé en ce qu'**il comprend une liaison souple (46) additionnelle entre le moteur (22) et le mât (20), la liaison souple additionnelle et l'élément d'accrochage étant situés de part et d'autre du mât dans une direction axiale de l'aéronef.

7. Ensemble d'aéronef selon la revendication 3, **caractérisé en ce que** certaines au moins des liaisons (43, 45) sont souples.

8. Ensemble d'aéronef selon l'une quelconque des revendications 1 à 7, **caractérisé en ce que** le mât (20) comprend une partie principale (23) linéaire et une partie de raccord (24a à 24d) joignant la partie principale (23) à l'élément d'accrochage (39), la partie de raccord (24a à 24d) comprend deux ailes planes (25a, 25b ; 48a, 48b) s'étendant latéralement à la partie principale en formant un angle entre elles, et une bride d'attache (29) s'étendant sur au moins un secteur de cercle, jointe aux ailes (25a, 25b ; 48a, 48b) par une face plane et attachée à la première bride (40) de l'élément d'accrochage (39) du moteur par une face opposée.

9. Aéronef, **caractérisé en ce qu'**il est pourvu d'un ensemble d'aéronef selon l'une quelconque des revendications 1 à 8.

## Patentansprüche

1. Flugzeugbaugruppe umfassend einen Aufhängungsmast (20), einen Motor (22) und ein Aufhängungselement (39), das sich zwischen dem Aufhängungsmast (20) und dem Motor (22) erstreckt, wobei das Aufhängungselement einen ersten Flansch (40), der am Mast (20) befestigt ist, einen zweiten Flansch (41), der am Motor (22) befestigt ist, wobei die Flansche (40, 41) kreisförmig sind, und eine starre Struktur (42), die die Flansche verbindet, umfasst, wobei die Flansche (40, 41) und die starre Struktur (42) den Motor (22) umgeben und dabei den Motor vollständig umhüllen, **dadurch gekennzeichnet, dass** der zweite Flansch (41) sich um eine Schwerpunktregion des Motors (22) erstreckt, und der Motor am Mast überhängend montiert ist, wobei der gesamte Überhang zum Aufhängungselement gehört.

2. Flugzeugbaugruppe nach Anspruch 1, **dadurch gekennzeichnet, dass** die starre Struktur aus diskreten Elementen besteht, und am Umfang der Flansche unterbrochen ist.

3. Flugzeugbaugruppe nach Anspruch 1 oder 2, **dadurch gekennzeichnet, dass** der zweite Flansch oder der erste Flansch am Motor oder am Mast durch diskrete Verbindungen befestigt ist (45, 43), die eine isostatische Montage zwischen dem ersten Flansch (40) oder dem zweiten Flansch (41) und dem Mast (20) oder dem Motor (22) definieren.

4. Flugzeugbaugruppe nach Anspruch 3, **dadurch gekennzeichnet, dass** die Anzahl der Verbindungen drei beträgt und diese um den ersten oder den zweiten Flansch herum verteilt sind und ausgebildet sind, um Kräfte nach jeweils zwei Richtungen (X, T; X, T') zu übertragen, wobei die zwei Richtungen eine axiale Richtung (X) des Flugzeugs (21) und eine im Wesentlichen tangentiale Richtung (T, T') des ersten Flansches oder des zweiten Flansches für jede der flexiblen Verbindungen sind.

5. Flugzeugbaugruppe nach Anspruch 3, **dadurch gekennzeichnet, dass** jeder der Flansche eine der Verbindungen an einer oberen Mantellinie hat und dass die Verbindungen um den zweiten Flansch herum in Winkeln von 90° bis 120° zueinander verteilt, jedoch um den ersten Flansch herum in Winkeln von höchstens 90° verteilt sind.

6. Flugzeugbaugruppe nach einem der Ansprüche 1 bis 5, **dadurch gekennzeichnet, dass** sie eine zusätzliche flexible Verbindung (46) zwischen dem Motor (22) und dem Mast (20) umfasst, wobei die zusätzliche flexible Verbindung und das Aufhängungselement sich beidseitig des Masts in einer axialen Richtung des Flugzeugs befinden.

7. Flugzeugbaugruppe nach Anspruch 3, **dadurch gekennzeichnet, dass** zumindest bestimmte der Verbindungen (43, 45) flexibel sind.

8. Flugzeugbaugruppe nach einem der Ansprüche 1 bis 7, **dadurch gekennzeichnet, dass** der Mast (20) einen linearen Hauptteil (23) und einen Anschlussteil (24a bis 24d), der den Hauptteil (23) mit dem Aufhängungselement (39) verbindet, umfasst, der Anschlussteil (24a bis 24d) umfasst zwei ebene Flügel (25a, 25b; 48a, 48b), die sich seitlich des Hauptteils unter Bildung eines Winkels zueinander erstrecken, und einen Anschlussflansch (29), der sich mindestens an einem Kreissektor erstreckt, mit den Flügeln (25a, 25b; 48a, 48b) durch eine ebene Fläche vereinigt ist und mit dem ersten Flansch (40) des Aufhängungselements (39) des Motors durch eine gegenüberliegende Fläche verbunden ist.

9. Flugzeug, **dadurch gekennzeichnet, dass** es mit einer Flugzeugbaugruppe nach einem der Ansprüche 1 bis 8 versehen ist.

## Claims

1. An aircraft assembly including a mounting structure (20), an engine (22) and a mounting element (39) extending between the mounting structure (20) and the engine (22), wherein the mounting element includes a first flange (40) attached to the mounting structure (20), a second flange (41) attached to the engine (22), wherein the flanges (40, 41) are circular, and a rigid structure (42) connects the flanges, and wherein the flanges (40, 41) and the rigid structure (42) surround the engine (22) by completely enclosing the engine, **characterised in that** the second flange (41) extends around a centre of gravity region of the engine (22), and the engine is assembled on the structure in an overhanging fashion, the entire overhang belonging to the mounting element.

2. An aircraft assembly according to claim 1, **characterised in that** the rigid structure consists of separate elements, and is discontinuous over the circumference of the flanges.

3. An aircraft assembly according to claim 1 or 2, **characterised in that** the second flange or the first flange is attached to the engine or to the mounting structure by separate connections (45, 43) defining an isostatic assembly between the first flange (40) or the second flange (41) and the mounting structure (20) or the engine (22).

4. An aircraft assembly according to claim 3, **characterised in that** there are three connections, distributed around the first or second flange and shaped to transmit forces in two directions each (X, T; X, T'), wherein the two directions are an axial direction (X) of the aircraft (21) and an essentially tangential direction (T, T') of the first flange or of the second flange for each of the flexible connections.

5. An aircraft assembly according to claim 3, **characterised in that** each of the flanges has one of the connections to an upper cone generation and that the connections are distributed around the second flange forming angles of 90° to 120° between them, but distributed around the first flange forming angles of at most 90°.

6. An aircraft assembly according to any of the claims 1 to 5, **characterised in that** it includes an additional flexible connection (46) between the engine (22) and the mounting structure (20), where the additional flexible connection and the mounting element are located either side of the structure in an axial direction of the aircraft.

7. An aircraft assembly according to claim 3, **characterised in that** at least some of the connections (43, 45) are flexible.

8. An aircraft assembly according to any of claims 1 to 7, **characterised in that** the mounting structure (20) includes a linear main portion (23) and a connecting portion (24a to 24d) joining the main portion (23) to the mounting element (39), the connecting portion (24a to 24d) includes two flat wings (25a, 25b; 48a, 48b) extending laterally to the main portion forming an angle between them, and an attaching flange (29) extending over at least a sector of a circle, attached to the wings (25a, 25b; 48a, 48b) by a flat face and attached to the first flange (40) of the engine's mounting element (39) by an opposite face.

9. An aircraft, **characterised in that** it is fitted with an engine assembly according to any of the claims 1 to 8.
